# EUROPÄISCHE PATENTANMELDUNG

(11) **EP 2 385 617 A1**
(43) Veröffentlichungstag der Anmeldung: **09.11.2011**
(21) Anmeldenummer: 10162157.1
(22) Anmeldetag: 06.05.2010
(51) Int. Cl.: H02M 3/158

(54) **Gleichstromsteller mit Steuerung**

(71) Anmelder: Brusa Elektronik AG, 9466 Sennwald (CH)
(72) Erfinder: Krause, Axel, 9650, Nesslau (CH)
(74) Vertreter: Rosenich, Paul

(57) **Zusammenfassung**

Es wird eine Steuerung (2) und ein Verfahren für einen Gleichstromsteller (1) angegeben, wobei der Gleichstromsteller (1) einen Eingang (E), einen Ausgang (A), einen Masseanschluss (GND) sowie zumindest eine Halbbrücke umfasst. Die Halbbrücke umfasst zwei in Serie geschaltete Schaltglieder (TR1..TR4) und eine mit deren Verbindungspunkt verbundene Induktivität (L1,L2). Erfindungsgemäss ist die Steuerung (2) dazu vorbereitet, den Strom (IL1,IL2) durch die Induktivität (L1,L2) zu messen und das masseseitig/eingangsseitig gelegene Schaltglied (TR2,TR4) / (TR1,TR2) auszuschalten, wenn der Strom einen gewissen Betragswert überschreitet. Schliesslich wird auch ein mit der erfindungsgemässen Steuerung (2) verbundener Gleichstromsteller (1) angegeben.

## Beschreibung

Die Erfindung betrifft eine Steuerung für einen Gleichstromsteller, wobei der Gleichstromsteller einen Eingang, einen Ausgang und einen Masseanschluss umfasst, sowie zumindest eine Halbbrücke mit zwei zwischen dem Eingang und dem Masseanschluss in Serie geschalteten Schaltgliedern und eine mit dem Verbindungspunkt der Schaltglieder und dem Ausgang des Gleichstromstellers verbundene Induktivität, und wobei die Steuerung zur Ansteuerung der Schaltglieder vorbereitet ist, derart, dass sich in der Induktivität ein Wechselstrom einstellt.

Weiterhin betrifft die Erfindung einen Gleichstromsteller, umfassend einen Eingang, einen Ausgang, einen Masseanschluss und zumindest eine Halbbrücke mit zwei zwischen dem Eingang und dem Masseanschluss in Serie geschalteten Schaltgliedern und eine mit dem Verbindungspunkt der Schaltglieder und dem Ausgang des Gleichstromstellers verbundene Induktivität, wobei der Gleichstromsteller mit einer eingangs erwähnten Steuerung verbunden ist bzw. diese umfasst.

Schliesslich betrifft die Erfindung ein Verfahren zum Ansteuern eines Gleichstromstellers, welcher einen Eingang, einen Ausgang und einen Masseanschluss umfasst, sowie zumindest eine Halbbrücke, mit zwei zwischen dem Eingang und dem Masseanschluss in Serie geschalteten Schaltgliedern und eine mit dem Verbindungspunkt der Schaltglieder und dem Ausgang des Gleichstromstellers verbundene Induktivität, wobei die Schaltglieder derart angesteuert werden, dass sich in der Induktivität ein Wechselstrom einstellt.

Als Gleichstromsteller oder auch DC/DC-Wandler bezeichnet man einen Stromrichter, welcher eine Eingangsspannung durch periodisches Schalten in eine (andere) Ausgangsspannung umwandelt. Als Grundtypen sind Tiefsetzsteller (auch bekannt als Abwärtswandler, Buck-Converter oder Step-Down-Converter) und Hochsetzsteller (auch bekannt als Aufwärtswandler, Boost-Converter oder Step-Up-Converter) bekannt. Als Schalter (auch Ventile genannt) kommen beispielsweise MOSFETs (Metal Oxide Semiconductor Field Effect Schaltglied), BipolarSchaltgliedern oder auch IGBTs (Insulated Gate Bipolar Schaltglied) und Thyristoren zum Einsatz.

Die vorliegende Erfindung behandelt einen kombinierten Gleichstromsteller, d.h. einen Buck/Boost-Converter oder Hoch/Tiefsetzsteller, bei dem zumindest eine Halbbrücke über eine Induktivität mit einem Ausgang verbunden ist. Eine solche Struktur ist prinzipiell aus der US 6,839,252 B2 bekannt, die einen DC/DC-Konverter offenbart, bei dem eine beliebige Anzahl an Halbbrücken über je eine Induktivität mit einem Ausgang des Konverters beziehungsweise mit der Last verbunden sind.

Nachteilig an den bekannten Schaltungen ist das schlechte EMV-Verhalten (Elektromagnetische Verträglichkeit), welches vorwiegend durch das "harte" Umschalten der Schaltglieder, welche üblicherweise durch Transistoren gebildet sind, verursacht wird. Als "hartes" Schalten wird im Zusammenhang der Erfindung ein Schalten verstanden, das ohne wesentliche Rücksichtnahme auf die Verhältnisse im Schaltglied, beispielsweise die im Transistor enthaltenen Ladungen, erfolgt.

Aufgabe der Erfindung ist es daher, eine verbesserte Steuerung und ein verbessertes Verfahren für einen Gleichstromsteller sowie einen verbesserten Gleichstromsteller anzugeben. Insbesondere soll damit die elektromagnetische Verträglichkeit verbessert und die Verlustleistung weiter reduziert werden.

Erfindungsgemäss wird diese Aufgabe durch eine Steuerung der eingangs genannten Art gelöst, welche dazu vorbereitet ist, den Strom durch die Induktivität des Gleichstromstellers zu messen und
a) das masseseitig gelegene Schaltglied des Gleichstromstellers dann in einen Aus-Zustand zu steuern, wenn der Strom vom Ausgang des Gleichstromstellers zur Induktivität fliesst und einen ersten vorgebbaren Betrag größer Null erreicht hat und
b) das eingangsseitig gelegene Schaltglied des Gleichstromstellers dann in einen Aus-Zustand zu steuern, wenn der Strom von der Induktivität zum Ausgang des Gleichstromstellers fliesst und einen zweiten vorgebbaren Betrag größer Null erreicht hat.

Die Aufgabe der Erfindung wird auch durch einen Gleichstromsteller der eingangs genannten Art gelöst, welcher mit einer erfindungsgemässen Steuerung verbunden ist bzw. diese umfasst.

Schliesslich wird die Aufgabe der Erfindung durch ein Verfahren der eingangs genannten Art gelöst, umfassend die Schritte:

Messen des Stroms durch die Induktivität und
a) Steuern des masseseitig gelegenen Schaltglieds in einen Aus-Zustand, wenn der Strom vom Ausgang zur Induktivität fliesst und einen ersten vorgebbaren Betrag größer Null erreicht hat und
b) Steuern des eingangsseitig gelegenen Schaltglieds in einen Aus-Zustand, wenn der Strom von der Induktivität zum Ausgang fliesst und einen zweiten vorgebbaren Betrag größer Null erreicht hat.

Durch die erfindungsgemässen Massnahmen wird das EMV-Verhalten des Gleichstromstellers deutlich verbessert. Dies wird dadurch erreicht, dass anstelle des "harten" Umschaltens der Schaltglieder vor dem Umschalten ein passives Kommutieren derselben abgewartet wird. Konkret wird abgewartet, bis der Strom durch die Induktivität nach dem Nulldurchgang genügend Energie bereitstellt, um die Kapazitäten des betreffenden Schaltglieds sowie auch externe Kapazitäten umzuladen. Umso grösser die umzuladenden Kapazitäten sind, desto mehr Energie wird auch benötigt, das heisst desto höher sollte auch der Betrag des genannten Stroms sein, um das passive Kommutieren zu ermöglichen.

Es kann auch vorgesehen sein, dass das passive Kommutieren nicht vollständig abgewartet oder ermöglicht wird. In diesem Fall würde eine Mischform aus "hartem" Umschalten und passivem Kommutieren resultieren, welche das EMV-Verhalten zwar nicht bestmöglich aber dennoch gegenüber dem reinen "harten" Umschalten verbessert.

Als "Schaltglieder" können im Rahmen der Erfindung alle Schalter verstanden werden, die ein Fliessen des Stroms in beide Richtungen prinzipiell ermöglichen. Insbesondere sind darunter Transistoren mit einer inhärenten antiparallelen Diode, also z.B. MOSFETs, zu verstehen oder aber auch Transistoren, die zwar keine inhärente antiparallele Diode aufweisen, denen aber eine externe Diode antiparallel geschaltet ist. Ein Beispiel für einen Transistor ohne inhärente antiparallele Diode ist ein Bipolartransistor, welchem eine externe Diode antiparallel geschaltet werden muss. Als "Schaltglied" ist dann die Kombination aus Transistor und externer antiparalleler Diode zu verstehen. Selbstverständlich kann aber auch z.B. einem MOSFET eine externe Diode antiparallel geschaltet werden. In diesem Fall wirken sowohl die inhärente als auch die externe Diode.

Vorteilhafte Ausgestaltungen und Weiterbildungen der Erfindung ergeben sich nun aus den Unteransprüchen sowie aus der Beschreibung in Zusammenschau mit den Figuren der Zeichnung bzw. sind durch sie geoffenbart.

Vorteilhaft ist es, wenn n parallel geschaltete Halbbrücken vorgesehen sind und die Steuerung zur frequenzsynchronen und um 360°/n phasenverschobenen Ansteuerung der Schaltglieder vorbereitet ist, derart, dass sich in den Induktivitäten um 360°/n phasenverschobene Wechselströme einstellen. Auf diese Weise kann ein "Strom-Rippel", also eine Stromschwankung, des Gleichstromstellers reduziert werden. Dies wird dadurch bewirkt, dass phasenverschobene Einzelströme mit vergleichsweise hohem Strom-Rippel addiert werden und somit einen Summenstrom mit vergleichsweise kleinem Strom-Rippel ergeben. Auf diese Weise kann der durch die Wechselmagnetisierung der Induktivität hervorgerufene und eher nachteilige Einfluss auf den Stromverlauf gemildert werden.

Besonders vorteilhaft ist es, wenn die Steuerung dazu vorbereitet ist, eine aus dem ersten und dem zweiten Strombetrag resultierende Amplitude des Wechselstroms bei einem ersten Mittelwert des Wechselstroms kleiner einzustellen als bei einem zweiten, größeren Mittelwert. Die bereits erwähnte Wechselmagnetisierung der Induktivität des Gleichstromstellers verursacht vergleichsweise hohe energetische Verluste. Um diese Verluste zu verringern, wird die Amplitude des Wechselstroms in der Induktivität, und damit deren Verlustleistung, reduziert. Insbesondere bei kleinen Ausgangsströmen des Gleichstromstellers ergibt sich somit ein verbessertes Verhältnis von Nutzleistung zu Verlustleistung, also ein verbesserter Wirkungsgrad.

Besonders vorteilhaft ist es auch, wenn die Steuerung dazu vorbereitet ist zwischen dem Ein-/Ausschalten des eingangsseitigen Schaltglieds und dem Aus-/Einschalten des masseseitigen Schaltglieds eine vorgebbare zeitliche Pause vorzusehen. Das Umladen von Kapazitäten beim Umschaltvorgang erfolgt nicht schlagartig sondern benötigt eine gewisse Zeit. Bei dieser Variante der Erfindung wird das Einschalten eines Schaltglieds so lange verzögert, bis diese Umladevorgänge im Wesentlichen abgeschlossen sind. Desweiteren wird durch die Pause ein Brückenkurzschluss vermieden.

Vorteilhaft ist es dabei, wenn die Pausen gleich lang sind. Somit kann das Vorsehen einer Pause auf einfache Weise implementiert werden.

Vorteilhaft ist es in diesem Zusammenhang aber auch, wenn
a) die Pause zwischen dem Ausschalten des eingangsseitigen Schaltglieds und dem Einschalten des masseseitigen Schaltglieds kürzer ist als die Pause zwischen dem Ausschalten des masseseitigen Schaltglieds und dem Einschalten des eingangsseitigen Schaltglieds, wenn der Wechselstrom im Mittel von der Induktivität zum Ausgang fliesst und/oder
b) die Pause zwischen dem Ausschalten des eingangsseitigen Schaltglieds und dem Einschalten des masseseitigen Schaltglieds länger ist als die Pause zwischen dem Ausschalten des masseseitigen Schaltglieds und dem Einschalten des eingangsseitigen Schaltglieds, wenn der Wechselstrom im Mittel vom Ausgang zur Induktivität fliesst. Bei dieser Variante der Erfindung wird dem Umstand Rechnung getragen, dass die Höhe des Stroms durch die Induktivität im Zeitpunkt des Umschaltens der Schaltglieder Einfluss auf die Dauer der Umladevorgänge der Kapazitäten hat. Um die Pause zwischen dem Ausschalten des einen Schaltglieds und dem Einschalten des anderen Schaltglieds an die vorliegenden Stromverhältnisse anzupassen, werden unterschiedlich lange Pausen vorgesehen. Das Verhältnis der Pausen kann dabei auch laufend an die Höhe des mittleren Ausgangsstroms des Gleichstromstellers angepasst werden.

Günstig ist es bei einem Gleichstromsteller, wenn je einem Schaltglied einer Halbbrücke jeweils ein erster Kondensator parallel geschaltet ist. Zwar verlängern zusätzliche Kondensatoren an den Schaltgliedern die Dauer des Umladevorgangs beim Kommutieren, allerdings wirken sie auch glättend auf den Spannungsverlauf und können so insgesamt zu einem verbesserten EMV-Verhalten beitragen.

Vorteilhaft ist es bei einem Gleichstromsteller auch, wenn zwischen Ausgang und Masseanschluss ein zweiter Kondensator vorgesehen ist. Auf diese Weise kann die Ausgangsspannung geglättet werden, sodass ein dem Gleichstromsteller nachgeschalteter Verbraucher nicht so stark durch Spannungsschwankungen beeinflusst wird.

Vorteilhaft ist es bei einem Gleichstromsteller zudem, wenn zwischen Eingang und Masseanschluss ein dritter Kondensator vorgesehen ist. Auf diese Weise kann die Eingangsspannung geglättet werden, sodass eine dem Gleichstromsteller vorgeschaltete Stromquelle nicht so stark durch Spannungsschwankungen beeinflusst wird.

An dieser Stelle wird angemerkt, dass sich die zur erfindungsgemässen Steuerung genannten Varianten und die daraus resultierenden Vorteile gleichermassen auf das erfindungsgemässe Verfahren und umgekehrt beziehen. Desgleichen beziehen sich die zur erfindungsgemässen Steuerung oder zum erfindungsgemässen Verfahren genannten Varianten und Vorteile gleichermassen auf den erfindungsgemässen Gleichstromsteller und umgekehrt.

Weiterhin wird angemerkt, dass sich das erfindungsgemässe Verfahren beziehungsweise die erfindungsgemässe Steuerung in Software und/oder in Hardware realisieren lässt. Wird die Erfindung in Software realisiert, dann führt ein Programm, welches in einem Mikroprozessor beziehungsweise Mikrocontroller abläuft, die erfindungsgemässen Schritte aus. Selbstverständlich kann die Erfindung auch bloss in Hardware umgesetzt werden, beispielsweise mit einem ASIC (Application Specific Integrated Circuit). Letzterer kann aber auch einen Prozessor beinhalten. Schliesslich kann ein Teil der Erfindung in Software, ein anderer Teil in Hardware umgesetzt werden.

Die obigen Ausgestaltungen und Weiterbildungen der Erfindung lassen sich auf beliebige Art und Weise kombinieren.

Die vorliegende Erfindung wird nachfolgend anhand der in den schematischen Figuren der Zeichnung angegebenen Ausführungsbeispiele näher erläutert. Es zeigen dabei:
- Fig. 1: schematisch eine Variante eines erfindungsgemässen Gleichstromstellers;
- Fig. 2: einen beispielhaften Stromverlauf in einer Induktivität des erfindungsgemässen Gleichstromstellers;
- Fig. 3: einen beispielhaften Verlauf des Ausgangsstroms des erfindungsgemässen Gleichstromstellers;
- Fig. 4: eine beispielhafte Abhängigkeit zwischen einem mittlerem Ausgangsstrom und Sollstrom des erfindungsgemässen Gleichstromstellers;

In den Figuren der Zeichnung sind gleiche und ähnliche Teile mit gleichen Bezugszeichen und funktionsähnliche Elemente und Merkmale - sofern nichts Anderes ausgeführt ist - mit gleichen Bezugszeichen aber unterschiedlichen Indizes versehen.

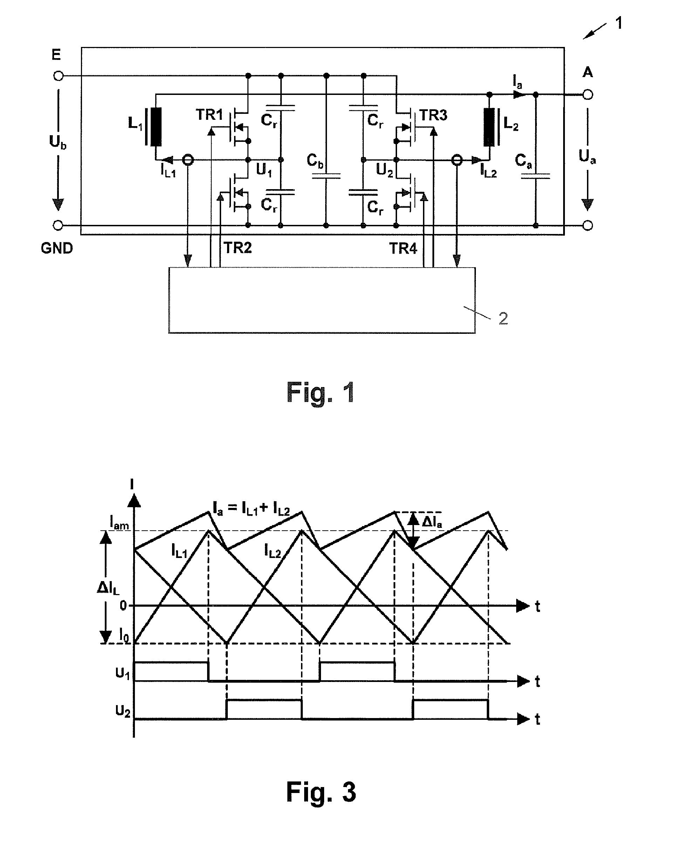

Fig. 1 zeigt einen Gleichstromsteller 1 mit einem Eingang E, einem Ausgang A und einem Masseanschluss GND. Der Gleichstromsteller 1 umfasst n>=1 (hier konkret 2) parallel geschaltete Halbbrücken, welche jeweils zwei zwischen dem Eingang E und dem Masseanschluss GND in Serie geschaltete Schaltglieder TR1..TR4 umfassen, welche in diesem Beispiel durch Transistoren mit inhärenter antiparalleler Diode - z.B. durch MOSFETs - gebildet sind. Selbstverständlich sind auch Schaltglieder ohne inhärente antiparallle Diode einsetzbar, wenn ihnen eine externe Diode antiparallel geschaltet wird. Weiterhin ist je Halbbrücke eine mit dem Verbindungspunkt der Transistoren TR1..TR4 und dem Ausgang A des Gleichstromstellers verbundene Induktivität L1, L2 vorgesehen.

In diesem Beispiel ist darüber hinaus je einem Transistor TR1..TR4 einer Halbbrücke jeweils ein erster Kondensator Cr parallel geschaltet. Darüber hinaus ist zwischen Ausgang A und Masseanschluss GND ein zweiter Kondensator Ca und zwischen Eingang E und Masseanschluss GND ein dritter Kondensator Cb vorgesehen.

Zudem umfasst der Gleichstromsteller 1 eine Steuerung 2 zur frequenzsynchronen und um 360°/n phasenverschobenen Ansteuerung der Transistoren TR1..TR4, wobei sich in den Induktivitäten L1, L2 ein phasenverschobener Wechselstrom IL1, IL2 einstellt. Erfindungsgemäss ist die Steuerung 2 dazu vorbereitet, den Strom IL1, IL2 durch die Induktivität L1, L2 zu messen und
a) den masseseitig gelegenen Transistor TR2, TR4 dann in einen Aus-Zustand zu steuern, wenn der Strom IL1, IL2 vom Ausgang A zur Induktivität L1, L2 fliesst und einen ersten vorgebbaren Betrag größer Null erreicht hat und
b) den eingangsseitig gelegenen Transistor TR2, TR4 dann in einen Aus-Zustand zu steuern, wenn der Strom IL1, IL2 von der Induktivität L1, L2 zum Ausgang A fliesst und einen zweiten vorgebbaren Betrag größer Null erreicht hat.

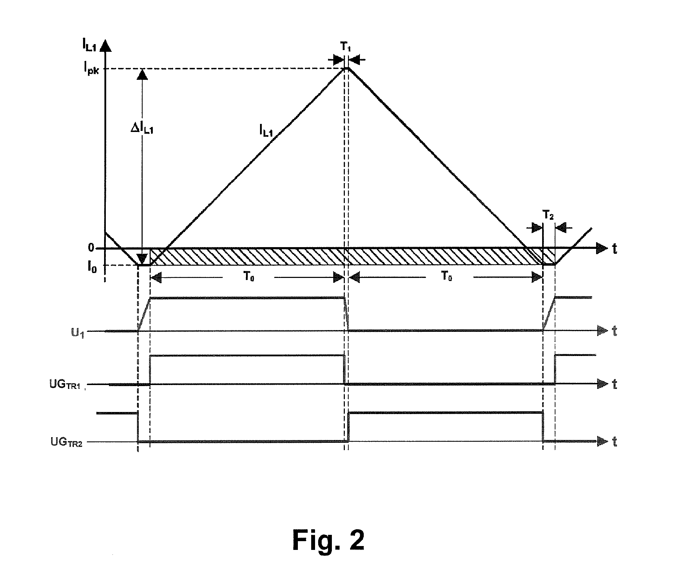

Die Funktion des in der Fig. 1 dargestellten Gleichstromstellers 1 wird nun anhand der Fig. 2 näher erläutert:

Fig. 2 zeigt einen Verlauf des Stroms IL1 durch die Induktivität L1 der in der Fig. 1 links angeordneten Halbbrücke über der Zeit t. Weiterhin zeigt die Fig. 2 die Spannung U1 am Verbindungspunkt der Transistoren TR1 und TR2. Außerdem sind die zeitlichen Verläufe der Steuerspannungen UGTR1 und UGTR2 der Transistoren TR1 und TR2 dargestellt.

Durch abwechselndes und phasenversetztes Ein- und Ausschalten der Transistoren TR1 und TR2 wird der Strom IL1 durch die Induktivität L1 in einem Bereich zwischen einem Minimalstrom I0 und einem Maximalstrom Ipk gehalten. Die Differenz zwischen Maximalstrom Ipk und Minimalstrom I0 beträgt ΔIL1. Wird der Transistor TR1 ein- und der Transistor TR2 ausgeschaltet, so liegt an der Induktivität L1 die Spannung U1 an, weswegen der Strom IL1 linear ansteigt. Wird der Transistor TR2 ein- und der Transistor TR1 ausgeschaltet, so liegt an der Induktivität L1 keine Spannung an, weswegen der Strom IL1 linear abfällt.

Durch Ändern des Minimalstroms I0 und des Maximalstroms Ipk, insbesondere bei gleichbleibender Differenz ΔIL1, kann der Mittelwert des Ausgangsstroms Ia des Gleichstromstellers 1 auf einen beliebigen Wert eingestellt werden. Dabei bleibt der Minimalstrom I0 aber immer im negativen Bereich und weist einen bestimmten Mindestbetrag auf und der Maximalstrom Ipk bleibt analog immer im positiven Bereich und weist ebenfalls einen bestimmten Mindestbetrag auf. In der Fig. 2 ist eine Situation dargestellt, in der der Minimalstroms I0 seinen höchsten Wert annimmt.

Damit das passive Kommutieren in einer vertretbaren Zeit erfolgen kann, wurden die Mindestbeträge der Ströme I0 und Ipk in einer konkreten, beispielhaften Ausgestaltung der Erfindung auf 2A festgelegt. Selbstverständlich können abhängig vom Aufbau des Gleichstromstellers 1 auch andere Werte von Vorteil sein.

Wie aus der Fig. 2 weiterhin ersichtlich ist, wird beim Umschalten von einem Transistor TR1 auf den anderen Transistor TR2 jeweils eine Pause vorgesehen, zwischen dem Ausschalten des eingangsseitigen Transistors TR1 und dem Einschalten des masseseitigen Transistors TR2 eine Pause T1, zwischen dem Ausschalten des masseseitigen Transistors TR2 und dem Einschalten des eingangsseitigen Transistors TR1 eine Pause T2. Im vorliegenden Beispiel ist die Pause T1 kürzer als die Pause T2. Dies hat damit zu tun, dass im dargestellten Fall im unteren Wendepunkt weniger Strom für das Kommutieren des Brückenpunktes zur Verfügung steht als im oberen Wendepunkt. Denkbar ist natürlich auch, zwei gleich lange Pausen T1, T2 vorzusehen, wobei die Pause T1 entsprechend verlängert wird, sodass auch im unteren Wendepunkt noch ausreichend Zeit für die Kommutierung zur Verfügung steht. Selbstverständlich kann auch die Pause T2 verkürzt werden, allerdings sollte dabei bedacht werden, dass dann das passive Kommutieren möglicherweise nicht vollständig zu Ende erfolgen kann. Auch sollten die Pausen T1 und T2 so bemessen sein, dass ein Brückenkurzschluss zuverlässig vermieden wird.

Im vorliegenden Fall sind die Einschaltzeiten T0 der Transistoren TR1 und TR2 gleich lang. Dies ist aber keineswegs eine zwingende Bedingung, denn mit dem Tastverhältnis, also dem Verhältnis der Einschaltdauer des eingangsseitig gelegenen Transistors TR1, TR3 zur Einschaltdauer des masseseitig gelegenen Transistors TR2, TR4 wird das Verhältnis zwischen Eingangsspannung Ue und Ausgangsspannung Ua, also die Spannungsübersetzung, bestimmt.

Fig. 3 zeigt nun ein Beispiel für einen ausgangsseitigen Summenstrom Ia=IL1+IL2 beider Halbbrücken. Wie leicht zu erkennen ist, ist der "Rippel" ΔIa (also die Schwankungen des Stroms) deutlich geringer als der Rippel ΔIL der einzelnen Drosselströme IL1 und I12. Der Mittelwert Iam kann je nach Anforderung sowohl positiv als auch negativ sein. Dazu werden wie bereits erwähnt der Maximalstrom Ipk und der Minimalstrom I0 entsprechend verschoben.

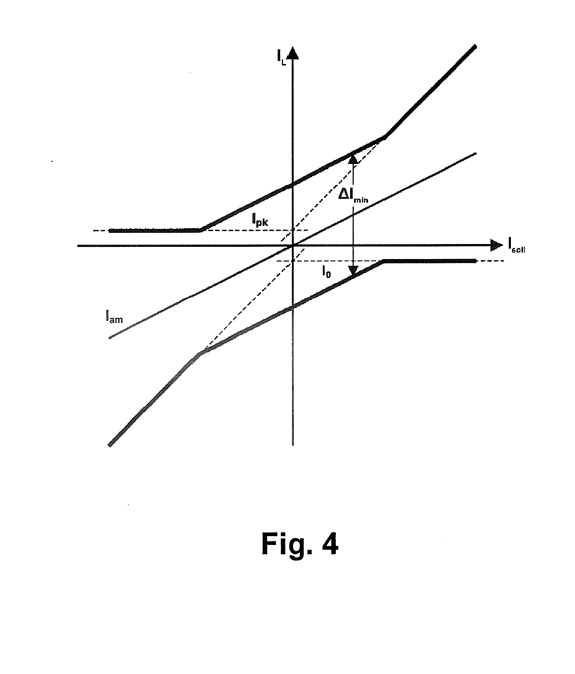

Fig. 4 zeigt nun wie der Minimalstrom I0 und der Maximalstrom Ipk in einer vorteilhaften Variante der Erfindung abhängig von einem Sollstrom Isoll, also dem gewünschten mittleren Ausgangsstrom Iam des Gleichstromstellers 1, gesetzt werden. Dabei wird die Amplitude des Drosselstroms ΔIL1 bei kleineren Werten von Isoll verkleinert, bei größeren Werten von Isoll vergrößert. In Fig. 4 ist zudem deutlich zu erkennen, dass der Minimalstrom I0 stets negativ ist und einen gewissen Mindestbetrag aufweist und dass der Maximalstrom Ipk stets positiv ist und ebenfalls einen gewissen Mindestbetrag aufweist.

Die Fig. 4 wird nun für die rechte Hälfte des Diagramms erläutert, die linke ist punktsymmetrisch dazu. Bei einem Sollstrom Isoll=0 wird eine vergleichsweise kleine Amplitude ΔILmin des Drosselstroms IL vorgesehen, um die energetischen Verluste, insbesondere die magnetischen Verluste in den Induktivitäten L1 und L2, zu verringern. Da Isoll=0 ist, erbringt der Gleichstromsteller 1 in diesem Betriebspunkt keine Nutzleistung, sondern verbraucht nur Energie, welche durch die Wechselströme I11 und IL2 bewirkt werden.

Dem Verkleinern der Amplitude ΔILmin sind im wesentlichen dadurch Grenzen gesetzt, dass dabei die Frequenz der Wechselströme I11 und IL2 steigt (die Steigung des Stroms I11 und IL2 bleibt ja bei Änderung des Minimalstroms I0 und des Maximalstroms Ipk ja gleich - siehe auch Fig. 2) was ebenfalls zu einer Erhöhung der Verlustleistung führt.

Für das Ferrit-Material "K2008" gilt beispielsweise, dass die magnetischen Verluste quadratisch mit der Amplitude ΔIL1 ansteigen aber nur mit der 1,17 fachen Potenz der Frequenz. Optimal werden der Minimalstrom I0 und der Maximalstrom Ipk nun so gesetzt, dass sich ein Minimum an Verlustleistung einstellt.

Bei Erhöhen des Sollstroms Isoll werden nun der Minimalstrom I0 und der Maximalstrom Ipk bei gleichbleibender Amplitude ΔILmin erhöht. Der Minimalstrom I0 und der Maximalstrom Ipk verlaufen daher parallel zum mittleren Ausgangsstrom Iam. Bei weiterem Steigern des Sollwerts Isoll kann der Minimalstrom I0 aber nicht mehr erhöht werden, da dieser ja wie erwähnt einen bestimmten Maximalwert nicht überschreiten darf, um das passive Kommutieren der masseseitig gelegenen Transistoren T2, T4 zu ermöglichen. Der Minimalstrom I0 wird daher bei weiter steigenden Sollstrom Isoll konstant gehalten. Damit der mittlere Ausgangsstrom Iam aber weiterhin linear mit dem Sollstrom Isoll ansteigt, wird der Maximalstrom Ipk nun stärker erhöht. Im Diagramm ist dies durch einen Knick nach oben erkennbar.

Durch diese bevorzugte Variante der Erfindung werden somit geringe Verlustleistung bei geringen Sollströmen Isoll, das Ermöglichen einer passiven Kommutierung über den gesamten Betriebsbereich (das heißt für alle Werte von Isoll) sowie die Linearität zwischen dem mittleren Ausgangsstrom Iam und dem Sollstrom Isoll vereint.

An dieser Stelle wird angemerkt, dass der in der Fig. 4 dargestellte Verlauf nur eine mögliche Variante der Erfindung zeigt. Selbstverständlich sind auch andere Verläufe der dargestellten Ströme möglich. Beispielsweise muss die Abhängigkeit zwischen dem Sollstrom Isoll und dem mittleren Ausgangsstrom Iam nicht zwingend linear sein, wenngleich dies auch vorteilhaft ist. Möglich wäre auch, dass der Maximalstrom Ipk in einem anderen Winkel oder an einer anderen Stelle nach oben knickt. Auch bogenförmige Stromverläufe sind selbstverständlich denkbar.

Abschliessend wird angemerkt, dass die aufgezeigten Varianten nur einen Ausschnitt aus den vielen Möglichkeiten für eine erfindungsgemässe Steuerung 2 beziehungsweise einen erfindungsgemässen Gleichstromsteller 1 darstellen, und nicht dazu herangezogen werden dürfen, den Anwendungsbereich der Erfindung zu limitieren. Für den Fachmann sollte es ein Leichtes sein, die Erfindung basierend auf den hier dargestellten Überlegungen auf seine Bedürfnisse anzupassen, ohne dabei den Schutzbereich der Erfindung zu verlassen. Darüber hinaus wird darauf hingewiesen, dass Teile der in den Figuren dargestellten Vorrichtungen auch die Basis für unabhängige Erfindungen bilden können.

### Bezugszeichenliste

- 1: Gleichstromsteller
- 2: Steuerung
- ΔIa: Amplitude Ausgangsstrom
- ΔIL, ΔIL1: Amplitude Strom durch Induktivität
- ΔImin: Minimalwert für die Stromamplitude an der Induktivität
- A: Ausgang
- Cr: erster Kondensator
- Ca: zweiter Kondensator
- Cb: dritter Kondensator
- E: Eingang
- GND: Masse
- I: Strom
- I0: Minimalstrom
- Ia: Ausgangsstrom
- IL1, IL2: Strom durch Induktivität
- Ipk: Maximalstrom
- Isoll: Sollstrom
- L1, L2: Induktivität
- t: Zeit
- T0: Einschaltdauer Transistor
- T1, T2: Umschaltpausen für Transistoren
- TR1..TR4: Transistor
- U1, U2: Spannung an Induktivität
- Ua: Ausgangspannung
- Ub: Eingangsspannung
- UGTR1, UGTR2: Steuerspannung für Transistor

## Patentansprüche

1. Steuerung (2) für einen Gleichstromsteller (1), wobei der Gleichstromsteller (1) einen Eingang (E), einen Ausgang (A) und einen Masseanschluss (GND) umfasst, sowie zumindest eine Halbbrücke mit zwei zwischen dem Eingang (E) und dem Masseanschluss (GND) in Serie geschalteten Schaltgliedern (TR1..TR4) und eine mit dem Verbindungspunkt der Schaltglieder (TR1..TR4) und dem Ausgang (A) des Gleichstromstellers verbundene Induktivität (L1, L2), und wobei die Steuerung (2) zur alternierenden Ansteuerung der Schaltglieder (TR1..TR4) vorbereitet ist,
**dadurch gekennzeichnet,**
**dass** die Steuerung (2) dazu vorbereitet ist, den Strom (IL1, IL2) durch die Induktivität (L1, L2) zu messen und
a) das masseseitig gelegene Schaltglied (TR2, TR4) dann in einen Aus-Zustand zu steuern, wenn der Strom (IL1, IL2) vom Ausgang (A) zur Induktivität (L1, L2) fliesst und einen ersten vorgebbaren Betrag (I0) größer Null erreicht hat und
b) das eingangsseitig gelegene Schaltglied (TR2, TR4) dann in einen Aus-Zustand zu steuern, wenn der Strom (IL1, IL2) von der Induktivität (L1, L2) zum Ausgang (A) fliesst und einen zweiten vorgebbaren Betrag (Ipk) größer Null erreicht hat.

2. Steuerung (2) nach Anspruch 1, **dadurch gekennzeichnet, dass** n parallel geschaltete Halbbrücken vorgesehen sind und die Steuerung (2) zur frequenzsynchronen und um 360°/n phasenverschobenen Ansteuerung der Schaltglieder (TR1..TR4) vorbereitet ist, derart, dass sich in den Induktivitäten (L1, L2) um 360°/n phasenverschobene Wechselströme (IL1, IL2) einstellen.

3. Steuerung (2) nach Anspruch 1 oder 2, **dadurch gekennzeichnet, dass** die Steuerung (2) dazu vorbereitet ist, eine aus dem ersten und dem zweiten Strombetrag (I0, Ipk) resultierende Amplitude (ΔIL1, ΔIL2) des Wechselstroms (IL1, IL2) bei einem ersten Mittelwert (Iam) des Wechselstroms (IL1, IL2) kleiner einzustellen als bei einem zweiten, größeren Mittelwert (Iam).

4. Steuerung (2) nach einem der vorgehenden Ansprüche, **dadurch gekennzeichnet, dass** diese dazu vorbereitet ist zwischen dem Ein-/Ausschalten des eingangsseitigen Schaltglieds (TR1, TR3) und dem Aus-/Einschalten des masseseitigen Schaltglieds (TR2, TR4) eine vorgebbare zeitliche Pause (T1, T2) vorzusehen.

5. Steuerung (2) nach Anspruch 4, **dadurch gekennzeichnet, dass** die Pausen (T1, T2) gleich lang sind.

6. Steuerung (2) nach Anspruch 4, **dadurch gekennzeichnet, dass**
a) die Pause (T1) zwischen dem Ausschalten des eingangsseitigen Schaltglieds (TR1, TR3) und dem Einschalten des masseseitigen Schaltglieds (TR2, TR4) kürzer ist als die Pause (T2) zwischen dem Ausschalten des masseseitigen Schaltglieds (TR2, TR4) und dem Einschalten des eingangsseitigen Schaltglieds (TR1, TR3), wenn der Wechselstrom (IL1, IL2) im Mittel von der Induktivität (L1, L2) zum Ausgang (A) fliesst und/oder
b) die Pause (T1) zwischen dem Ausschalten des eingangsseitigen Schaltglieds (TR1, TR3) und dem Einschalten des masseseitigen Schaltglieds (TR2, TR4) länger ist als die Pause (T2) zwischen dem Ausschalten des masseseitigen Schaltglieds (TR2, TR4) und dem Einschalten des eingangsseitigen Schaltglieds (TR1, TR3), wenn der Wechselstrom (IL1, IL2) im Mittel vom Ausgang (A) zur Induktivität (L1, L2) fliesst.

7. Gleichstromsteller (1), umfassend:
- einen Eingang (E), einen Ausgang (A) und einen Masseanschluss (GND),
- zumindest eine Halbbrücke, umfassend zwei zwischen dem Eingang (E) und dem Masseanschluss (GND) in Serie geschaltete Schaltglieder (TR1..TR4) sowie eine mit dem Verbindungspunkt der Schaltglieder (TR1..TR4) und dem Ausgang (A) des Gleichstromstellers verbundene Induktivität (L1, L2),
**gekennzeichnet durch**
eine Steuerung (2) nach einem der Ansprüche 1 bis 6.

8. Gleichstromsteller (1) nach Anspruch 7, **gekennzeichnet durch** n parallel geschaltete Halbbrücken und eine Steuerung nach einem der Ansprüche 2 bis 6.

9. Gleichstromsteller (2) nach einem der Ansprüche 7 bis 8, **dadurch gekennzeichnet, dass** je einem Schaltglied (TR1..TR4) einer Halbbrücke jeweils ein erster Kondensator (Cr) parallel geschaltet ist.

10. Gleichstromsteller (2) nach einem der Ansprüche 7 bis 9, **dadurch gekennzeichnet, dass** zwischen Ausgang (A) und Masseanschluss (GND) ein zweiter Kondensator (Ca) vorgesehen ist.

11. Gleichstromsteller (2) nach einem der Ansprüche 7 bis 10, **dadurch gekennzeichnet, dass** zwischen Eingang (E) und Masseanschluss (GND) ein dritter Kondensator (Cb) vorgesehen ist.

12. Verfahren zum Ansteuern eines Gleichstromstellers, welcher einen Eingang (E), einen Ausgang (A) und einen Masseanschluss (GND) umfasst, sowie zumindest eine Halbbrücke, mit zwei zwischen dem Eingang (E) und dem Masseanschluss (GND) in Serie geschaltete Schaltglieder (TR1..TR4) und eine mit dem Verbindungspunkt der Schaltglieder (TR1..TR4) und dem Ausgang (A) des Gleichstromstellers verbundene Induktivität (L1, L2), wobei die Schaltglieder (TR1..TR4) alternierend angesteuert werden, wobei sich in der Induktivität (L1, L2) ein Wechselstrom (IL1, IL2) einstellt,
**gekennzeichnet durch** die Schritte:
Messen des Stroms (IL1, IL2) **durch** die Induktivität (L1, L2) und
a) Steuern des masseseitig gelegenen Schaltglieds (TR2, TR4) in einen Aus-Zustand, wenn der Strom (IL1, IL2) vom Ausgang (A) zur Induktivität (L1, L2) fliesst und einen ersten vorgebbaren Betrag (I0) größer Null erreicht hat und
b) Steuern des eingangsseitig gelegenen Schaltglieds (TR2, TR4) in einen Aus-Zustand, wenn der Strom (IL1, IL2) von der Induktivität (L1, L2) zum Ausgang (A) fliesst und einen zweiten vorgebbaren Betrag (Ipk) größer Null erreicht hat.
